# EUROPEAN PATENT APPLICATION

(11) **EP 4 573 995 A1**
(43) Date of publication of application: **25.06.2025**
(21) Application number: 23219825.9
(22) Date of filing: 22.12.2023
(51) Int. Cl.: A47J 43/07, A47J 43/08

(54) **BEARING SYSTEM, JAR AND HOUSEHOLD APPLIANCE**

(71) Applicant: BSH Hausgeräte GmbH, 81739 München (DE)
(72) Inventor: Ocepek, Domen, 1411 Izlake (SI); Cepon, Gregor, 1354 Horjul (SI); Decman, Igor, 3232 Ponikva (SI); Benda, Nace, 3342 Gornji Grad (SI); Pecnik, Gregor, 3330 Mozirje (SI)

(57) **Abstract**

Disclosed is a bearing system (12) for guiding an electrically driven shaft to which a tool (10) for processing food inside a jar (1) of a household appliance, for instance a blender, can be attached, having a vibration damping element (80) which is adapted to reduce a vibration transfer from the bearing system (12) into the jar (1) in both, axial and radial, directions, a jar (1) and a household appliance.

## Description

The present invention concerns a bearing system for guiding an electrically driven shaft of a tool for processing food inside a jar of a household appliance, for instance a blender, a jar of an electrical household appliance and a household appliance.

Electrical household appliances such as blenders have a base and a removable jar for receiving food to be processed. A tool such as a rotating knife is positioned inside the jar and driven by an electric motor which is positioned inside the base. Between the tool and the motor, a bearing system is provided. The bearing system is inserted in bottom portion of the jar and guides a driven shaft to whose head portion the tool can be attached. At its foot portion, a coupling (clutch) system is provided in order to be removably connected with the motor shaft. During operation it has been shown that vibrations are transferred from the motor and/or the bearing system into the jar, which can lead to a high noise level and stresses all parts of the kitchen appliance.

It is an object of the present invention to provide an improved bearing system avoiding or at least reducing a vibration transfer into the jar, an optimised jar of a household appliance and a quiet and durable kitchen household appliance such as a blender.

The object is achieved by a bearing system with the features of claim 1, by a jar with the features of claim 6 and by an electrical household appliance with the features of claim 7. Advantageous embodiments are disclosed in the dependent claims, in the description, and in the drawings.

An inventive bearing system for guiding an electrically driven shaft to which a tool for processing food inside a jar of a household appliance, for instance a blender, can be attached has an annular vibration damping element. The annular vibration damping element surrounds a bearing system portion and is adapted to reduce a vibration transfer from the bearing system into a bottom portion of the jar in axial direction and in radial direction.

The vibration damping element acts as a shock absorber in both directions, axial and radial, and thus insulates vibration source components from its surrounding, which results in a noise (sound power level) reduction. Preferably, the vibration damping element is made of a durable elastomer or any other soft material in right hardness produced with vulcanization, injection or similar production technology.

In a preferred embodiment, the bearing system has at least one bearing, preferably two bearings, which is positioned inside a housing formed by an upper shell and a lower shell. The vibration damping element surrounds both shells and extends over a separating plane of the housing. In order to fix the vibration damping element, the shells have radial projections for clamping the vibration damping element between them axially. Splitting the housing of the bearing in separate parts facilitates assembly and disassembly of the bearing system. By surrounding the bearing portion circumferentially, no direct contact is given between the bearing portion and the bottom portion in radial direction, thus a vibration transfer from the bearing system to the jar is at least reduced.

An axial vibration reduction can be realised by means of two radially outer shoulders. The upper shoulder and the lower shoulder form an outer groove in which the bottom portion can be engaged, such that the vibration damping element is in axial contact inside the jar and outside the jar. By means of this, no direct contact is given between the bearing portion and the bottom portion in axial direction.

Preferably, the vibration damping element acts as a self-centering element which is adapted to align the bearing system axially to a motor shaft. By means of this, vibrations due to misalignment or irregularities in concentricity of the driven shaft and the motor shaft are prevented.

Additionally or alternatively, the vibration damping element acts as a seal adapted to seal the bottom portion against leakage. The sealing characteristic of the vibration damping element and rotary seals of the driven shaft make it possible to clean the jar together with a tool (knife) holder or the jar and the tool holder separately in a dishwasher. Thus, the solution is dishwasher safe.

An inventive jar of a household appliance such as a blender is equipped with a bearing system according to any of the proceeding claims.

Due to this, during operation the jar is characterised by a calm and/or quiet behaviour as axial and radial vibrations transfers from the bearing system into the jar are at least reduced. In addition, a leakage between the bearing system and the bottom portion receiving the bearing system is prevented.

An inventive electrical household appliance is a blender and has a corresponding jar.

By means of this, the blender shows a quiet operation behaviour as axial and radial vibrations transfers from the bearing system into the jar are at least reduced. Due to the at least reduced axial and radial vibrations transfers, the household appliance can last longer than conventional electric blenders.

In what follows, an exemplary embodiment of the present invention is explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in
- Fig. 1:: a section view of an exemplary embodiment of an inventive jar of a household appliance according to the present invention;
- Fig. 2:: an isolated partial view of an inventive bearing system shown in Figure 1;
- Fig. 3:: an enlarged view of the inventive bearing system in an installed state; and
- Fig. 4:: an enlarged view of an installed inventive vibration damping element shown in Figure 1; and
- Fig. 5:: the jar and a base of the household appliance in a separated position.

Terms such as "radial" and "axial" refer to a longitudinal axis of the household appliance described below and which is identical to a rotation axis of its tool. As shown in the figures, in normal use the longitudinal axis extends in vertical direction.

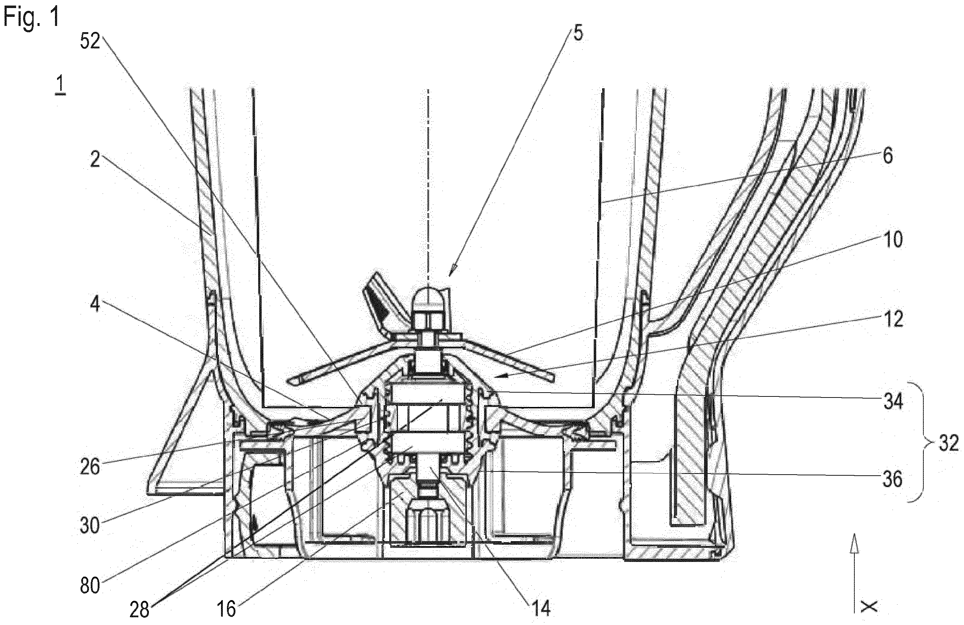

Figure 1 shows a sectional view along a vertical axis of a lower part of an inventive jar 1 of an electrical household appliance such as a blender.

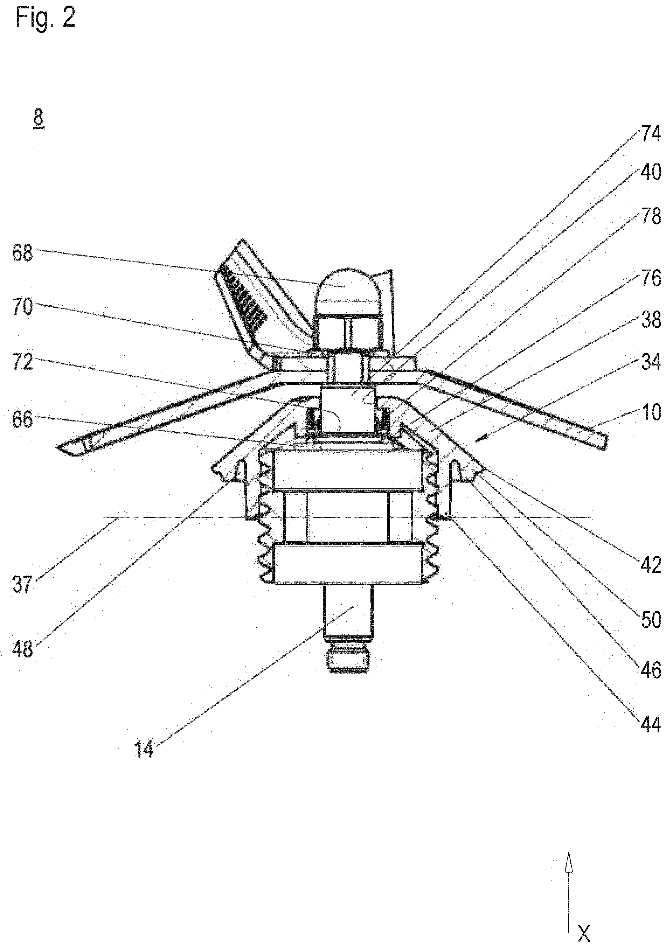

The jar 1 has a wall portion 2 and a bottom portion 4 defining a processing space 6 for food to be processed. In order to process food, a tool arrangement 8 is provided (Fig. 2).

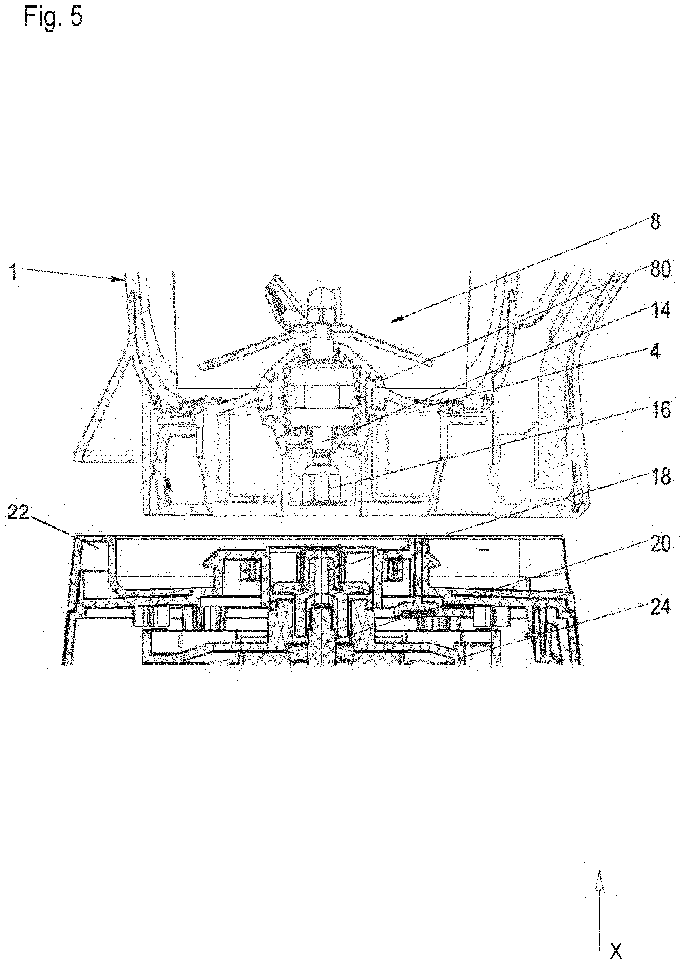

The tool arrangement 8 is positioned in the bottom portion 4 and has a rotating tool 10, such as a knife, and a bearing system 12 for guiding a shaft 14 (driven shaft) for driving the tool 10. The tool 10 is attached to a head portion of the driven shaft 14 and thus positioned inside the processing space 6. At a lower end of the driven shaft 14, a clutch element 16 is provided in order to be brought into engagement with a corresponding counter-part 18 which is attached to a motor shaft 20 of an electric motor unit 22 inside a base 24 of the household appliance (Figure 5).

The bottom portion 4 has a dome like shape and a central opening 26 (bottom opening) having a constant inner diameter. The bearing system 12 extends through the bottom opening 26 and is removably fixed to the bottom portion 4. Basically, the bearing system 12 has two bearings 28 with a bearing cage 30 in which the driven shaft 14 is guided. In order to place the bearing system 12 inside the bottom opening 26, a multi-part housing 32 is provided.

The housing 32 is formed by an upper shell 34 and by a lower shell 36. With reference to Figure 2, a separating plane 37 of the housing 32 is positioned in the middle between the bearings 28.

The upper shell 34 has a conical cover 38 with a central circular through-hole 40 in order to put the driven shaft 14 through and a circular edge 42 (cover edge). An outer diameter of the cover 38 is greater than the inner diameter of the bottom opening 26.

A cylindrical wall 44 on an underside of the cover 38 surrounds the bearing cage 30 partially. The cylindrical wall 44 has an outer diameter which is smaller than the inner diameter of the bottom opening 26.

Further on, a cylindrical projection 46 is provided on the underside of the cover 38 in a radial distance to the cover edge 42 and the cylindrical wall 44 such that an annular ring space 48 is provided radially outside the cylindrical wall 44. The cylindrical projection 46 has smaller axial extension than the cylindrical wall 44.

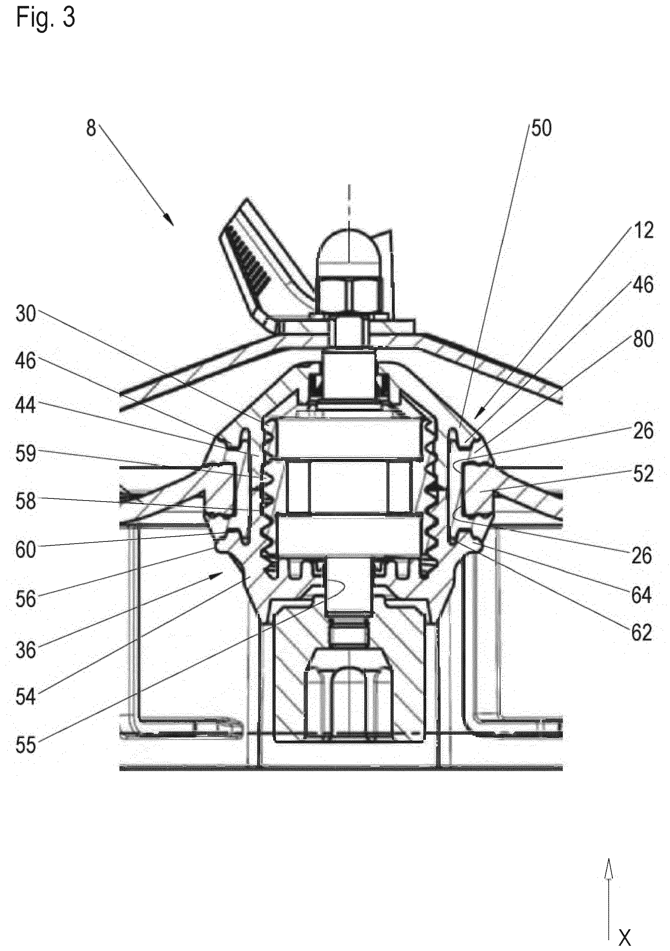

As the cover 38 extends radially outwards with regard to the cylindrical wall 44, the upper shell 34 has a radially outer ring projection 50 that extends radially over an edge region 52 (Figure 3) of the bottom opening 26.

With reference to Figure 3, the lower shell 36 is a nut-like part of the bearing system 12. It is adapted to secure the bearing system 12 in axial position in the bottom opening 26 of the jar 1. It has a bottom part 54 with a central circular through-hole 55 in order to put the driven shaft 14 through and a circular edge 56. An outer diameter of the bottom part 54 is greater than the inner diameter of the bottom opening 26. Such a configuration simplifies assembly and disassembly of the bearing system 12, namely its upper shell 34 and lower shell 36.

A cylindrical wall 58 on an upper side of the bottom part 54 surrounds the bearing cage 30 partially. The cylindrical wall 58 has the same outer diameter as the cylindrical wall 44 of the upper shell 34. In addition, the lower shell 36, its inner circumferential surface, is in thread engagement 59 with the bearing cage 30, its outer circumferential surface.

Further on, a cylindrical projection 60 is provided on the upper side of the bottom part 54 in a radial distance to the circular edge 56 and the cylindrical wall 58 such that annular ring space 62 is provided radially outside the cylindrical wall 58. The cylindrical projection 60 has a smaller axial extension than the cylindrical wall 58.

As the bottom part 54 extends radially outwards with regard to the cylindrical wall 58, the lower shell 36 also has a radially outer ring projection 64 that extends radially over the edge region 52 of the bottom opening 26 opposite to the radially outer ring projection 50 of the upper shell 34.

In an assembled state, both cylindrical walls 44, 58 and both cylindrical projections 46, 60 are axially aligned to each other. As the cylindrical walls 44, 58 extend to the separating plane 37, the cylindrical projections 46, 60 are axially spaced apart from each other in a distance which is greater than an axial extension of the edge region 52 of the bottom portion 4 of the jar 1.

With reference to Figure 2, the driven shaft 14 is secured in axial position inside the bearing system 12 via an upper locking ring 66. In order to secure the tool 10 on the head of the driven shaft 14, a dome nut 68 (and a washer 70) is/are provided which pushes the tool 10 against a shoulder 72 of the head. In an annular cavity between a shaft portion 74 forming the shoulder 72 and a cylindrical wall 76 on the underside of the cover 38 of the upper shell 34, a rotary seal 78 is provided.

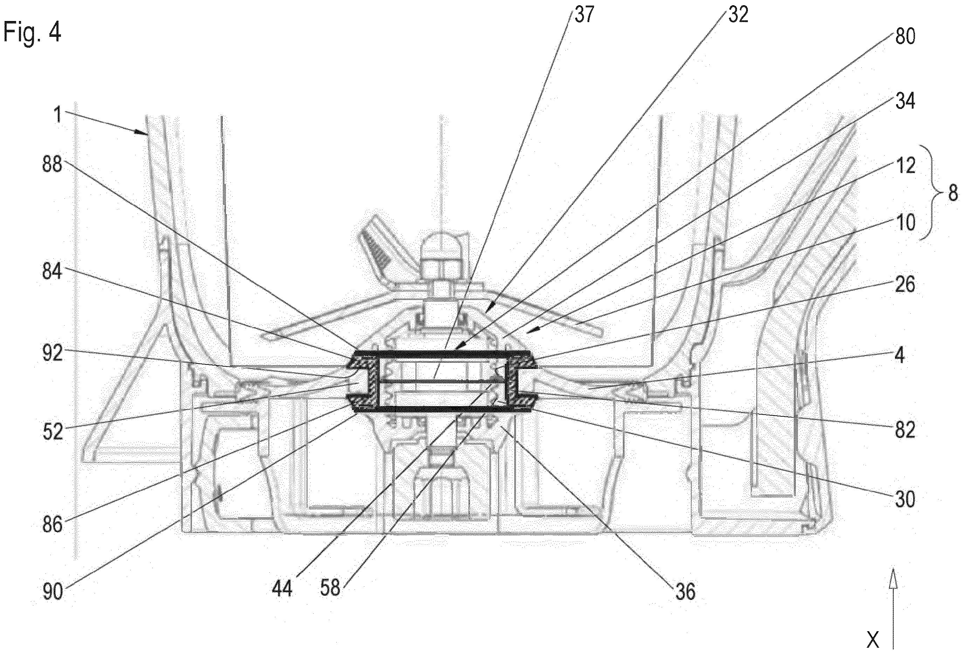

With reference to Figure 4, according to the invention, in order to reduce transfer of vibrations generated by the bearing system 12 into the jar 1, a vibration damping element 80 is provided.

The vibration damping element 80 is positioned between the housing 32 and the bottom portion 4 in axial direction and in radial direction. Thus, the bearing system 12 does not have any direct contact with the bottom portion 4. In both directions, axial and radial, the bearing system 12 with the tool 10 (tool arrangement 8) is only in an indirect contact with the bottom portion 4. Preferably, the vibration damping element 80 is made of a vibration reducing (insulating) material such as an elastic material, for instance a rubber material, preferably durable elastomer.

The vibration damping element 80 has an annular ring like shape. It surrounds the cylindrical wall 44 of the cover 38 (upper shell 34) and the cylindrical wall 58 of the bottom part 54 (lower shell 36) and the bearing cage 30. The vibration damping element 80 has a cylindrical portion 82 whose inner diameter corresponds to an outer diameter of the cylindrical wall 44 and the cylindrical wall 58 and whose outer diameter corresponds to the inner diameter of the opening 26 such that an annular gap between them is closed by the cylindrical portion 82. In an assembled state, the vibration damping element 80 surrounds both cylindrical walls 44, 58 of the shells 34, 36, thereby extending over the separating plane 37 of the housing 32.

Further on, the vibration damping element 80 has a radially outer upper shoulder 84 and a radially outer lower shoulder 86. The shoulders 84, 86 are spaced apart from each other in axial direction thereby forming an annular groove 92 whose extension in axial direction corresponds to the extension of the edge region 52 of the bottom opening 26 in axial direction such that the edge region 52 of the bottom opening 26 can be introduced in the annular groove 92.

The axial extension of each shoulder 84, 86 in axial direction is such that an upper axial gap and a lower axial gap between the cover 38 of the housing 32 and the bottom part 54 of the housing 32 are closed.

In outer opposite surfaces of the shoulders 84, 86 a respective ring groove 88, 90 is provided. The ring grooves 88, 90 have a size that corresponds to the size of the cylindrical projections 46, 60 of the upper shell 34 and the lower shell 36 respectively. In an assembled state, the cylindrical projections 46, 60 are inserted into the ring grooves 88, 90, or in other words, the shoulders 84, 86 are inserted partially in the annular ring spaces 48, 62 of the upper shell 34 and the lower shell 36 respectively (see Figures 2 and 3).

By means of the lower shell 36 of the housing 32 in combination with the ring projections 50, 64 of the upper shell 34 and the lower shell 36, the vibration damping element 80 can be pressed together axially, thereby extending in radial direction. As a consequence, the vibration damping element 80 does not only reduce vibration transfers in axial direction (via the shoulders 84, 86) and in radial direction (via the cylindrical portion 82), but also acts as a seal against leakage in the bottom portion 4.

Further on, upon placing the jar 1 equipped with the bearing system 12 with the tool 10 (tool arrangement 8) on a base 24 of the household appliance providing the motor unit 22 as illustrated in Figure 5, the vibration damping element 80 also acts as a self-centering element, when the clutch elements 16, 18 are brought into engagement.

Disclosed is a bearing system for guiding an electrically driven shaft to which a tool for processing food inside a jar of a household appliance, for instance a blender, can be attached, having a vibration damping element which is adapted to reduce a vibration transfer from the bearing system into the jar in both, axial and radial, directions, a jar and a household appliance.

### Reference signs

- 1: jar
- 2: wall portion
- 4: bottom portion
- 6: processing space
- 8: tool arrangement
- 10: tool
- 12: bearing system
- 14: driven shaft
- 16: clutch element
- 18: counter-part
- 20: motor shaft
- 22: motor unit
- 24: base
- 26: bottom opening
- 28: bearing
- 30: bearing cage
- 32: housing
- 34: upper shell
- 36: lower shell
- 37: separating plane
- 38: cover
- 40: circular through-hole
- 42: cover edge
- 44: cylindrical wall
- 46: cylindrical projection
- 48: annular ring space
- 50: ring (radial) projection
- 52: edge region (bottom opening)
- 54: bottom part
- 55: through-hole
- 56: circular edge (bottom part)
- 58: cylindrical wall
- 59: thread engagement
- 60: cylindrical projection
- 62: annular ring space
- 64: ring (radial) projection
- 66: locking ring
- 68: dome nut
- 70: washer
- 72: shoulder
- 74: shaft portion
- 76: cylindrical wall
- 78: rotary seal
- 80: vibration damping element
- 82: cylindrical portion
- 84: (upper) shoulder
- 86: (lower) shoulder
- 88: ring groove
- 90: ring groove
- 92: annular groove

- X: centre axis

## Claims

1. A bearing system (12) for guiding an electrically driven shaft to which a tool (10) for processing food inside a jar (1) of a household appliance, for instance a blender, can be attached, **characterised in that** an annular vibration damping element (80) is provided which surrounds a bearing system portion and which is adapted to reduce a vibration transfer from the bearing system (12) into a bottom portion (4) of the jar (1) in axial and radial direction.

2. The bearing system according to claim 1, wherein the bearing system (12) has at least one bearing (28) which is positioned inside a housing (32) formed by an upper shell (34) and a lower shell (36), wherein the vibration damping element (80) surrounds both shells (34, 36) and extends over a separating plane (37) of the housing (32), each shell has a radial projection (50, 64) for clamping the vibration damping element (80) between them axially.

3. The bearing system according to claim 2, wherein the vibration damping element (80) has a radially outer upper shoulder (84) and a radially outer lower shoulder (86) which are adapted to be in contact with the bottom portion (4) from both sides.

4. The bearing system according to claims 1, 2 or 3, wherein the vibration damping element (80) acts a self-centering element adapted to align the bearing system (12) axially to a motor shaft (20).

5. The bearing system according to claims 1, 2 or 3, wherein the vibration damping element (80) acts as a seal adapted to seal the bottom portion (4) against leakage.

6. A jar (1) of a household appliance such as a blender being equipped with a bearing system (12) according to any of the proceeding claims.

7. An electrical household appliance with ajar (1) according to claim 6.
